# EUROPEAN PATENT SPECIFICATION

(11) **EP 1 122 932 B1**
(45) Date of publication and mention of the grant of the patent: **09.08.2006**
(21) Application number: 01102150.8
(22) Date of filing: 01.02.2001
(51) Int. Cl.: H04L 29/06, G06F 1/00

(54) **Protection of computer networks against malicious content**
Schutz von Computernetzen gegen böswillige Inhalte
Protection de réseaux d'ordinateurs contre des contenus malintentionnés

(30) Priority: 04.02.2000 US 498093
(43) Date of publication of application: 08.08.2001
(73) Proprietor: Aladdin Knowledge Systems Ltd., Tel Aviv 67211 (IL)
(72) Inventor: Margalit, Dany, Ramat Gan 52223 (IL); Gruper, Shimon, Kiryat Haim 26307 (IL)
(74) Representative: Modiano, Micaela Nadia

(56) References cited:
- WO-A-00/00879
- WO-A-97/39399
- US-A- 6 088 803

## Description

### FIELD OF THE INVENTION

The present invention relates to computer network communications generally and more particularly to apparatus and methods for providing security in computer network communications.

### BACKGROUND OF THE INVENTION

There exist a large number of U.S. Patents which deal with security in computer network communications. The following U.S. Patents and the references cited therein are believed to represent the state of the art: 5,951,698; 5,918,008; 5,907,834; 5,892,904; 5,889,943; 5,881,151; 5,859,966; 5,854,916; 5,842,002; 5,832,208; 5,826,012; 5,822,517; 5,809,138; 5,802,277; 5,748,940; 5,684,875; 5,679,525; 5,675,711; 5,666,411; 5,657,473; 5,649,095; 5,623,600; 5,613,002; 5,537,540; 5,511,184; 5,111,163; 5,502,815; 5,485,575; 5,473,769; 5,452,442; 5,398,196; 5,359,659; 5,319,776.

Security in computer network communications deals with two general types of malicious content which may be communicated over a network to a computer: viruses and vandals. Viruses may be classified into a number of categories, such as file infectors, file system viruses, macro viruses and system/boot record infectors.

Vandals are distinguished from viruses in that whereas viruses require a user to execute a program in order to cause damage, vandals are auto-executable Internet applications and may cause immediate damage. Currently the following types of vandals are known: Java applets, ActiveX objects, scripts and cookies. Vandals may bide in various types of communicated content, including Email, web content, legitimate sites and file downloads.

It is known to employ proxy servers to detect and prevent receipt of malicious content by a computer. Use of proxy servers for this type of application is described inter alia in the aforesaid U.S. Patents 5,951,698; 5,889,943 & 5,623,600. The use of proxy servers for this purpose has a number of disadvantages including non-real time operation, generation of network bottlenecks, requiring special configuration of each desktop and relative ease of bypass by a user.

WO 00/00879 discloses a Virtual Private Network (VPN) in which computers are connected to access filters that provide access checking at IP-level and protocol. The access filters comprise proxies that, efter having checked and confurned that access is to be allowed, check all data entering the VPN and transfer such data to the clients and to a temporary file for virus checking, preventing the last portion of data from being sent to the clients until virus checking is complete.
WO 97/39399 discloses an apparatus for detecting and eliminating viruses which may be introduoed by messages through a postal node of a network e-mail system, in which postal node is polled for unscanned messages, which are downloaded and checked for viruses into a memory of the node.

### SUMMARY OF THE INVENTION

The present invention seeks to provide apparatus and a method for protection of computers against malicious content generally in real time and without requiring the use of a proxy server. The apparatus and the method according to the invention are defined in the appented claims.

There is provided in accordance with a preferred embodiment of the present invention a gateway including an input for receiving communications packets, an output for outputting communications packets generally in real time with respect to receipt thereof, a policy manager determining criteria for collection and inspection of a collection of packets and a packet collection agent receiving packets from the input in accordance with criteria established by the policy manager and including a content inspector inspecting the collection of packets in accordance with criteria established by the policy manager and being operative to prevent supply of at least one packet of a collection of packets to the output when the collection of packets includes undesirable content in accordance with the criteria established by the policy manager.

There is also provided in accordance with a preferred embodiment of the present invention a method for protecting a computer from malicious content comprising the steps of:
determining criteria for collection and inspection of a collection of packets;
receiving packets from among the collection of packets in accordance with the criteria;
inspecting the packets in accordance with the criteria;
preventing output of at least one packet but not all packets of a collection of packets when the collection of packets includes undesirable content in accordance with the criteria; and
outputting packets other than the at least one packet generally in real time with respect to receipt thereof;

In accordance with a preferred embodiment of the present invention, the at least one packet is the last packet of a file.

### BRIEF DESCRIPTION OF THE DRAWINGS

The present invention will be understood and appreciated more fully from the following detailed description, taken in conjunction with the drawings in which:
Fig. 1A is a simplified block diagram illustration of implementation of the invention in a firewall-type configuration for checking incoming Internet but not intranet traffic;
Fig. 1B is a simplified block diagram illustration of implementation of the invention for checking all incoming communications;
Fig. 2 is a simplified block diagram illustration of the use of multiple content inspectors by a single packet collection agent; and
Fig. 3 is a simplified flow chart illustrating operation of a packet collection agent in accordance with a preferred embodiment of the present invention.

### DETAILED DESCRIPTION OF PREFERRED EMBODIMENTS

The present invention seeks to provide protection of a computer against malicious content without requiring the use of a proxy server.

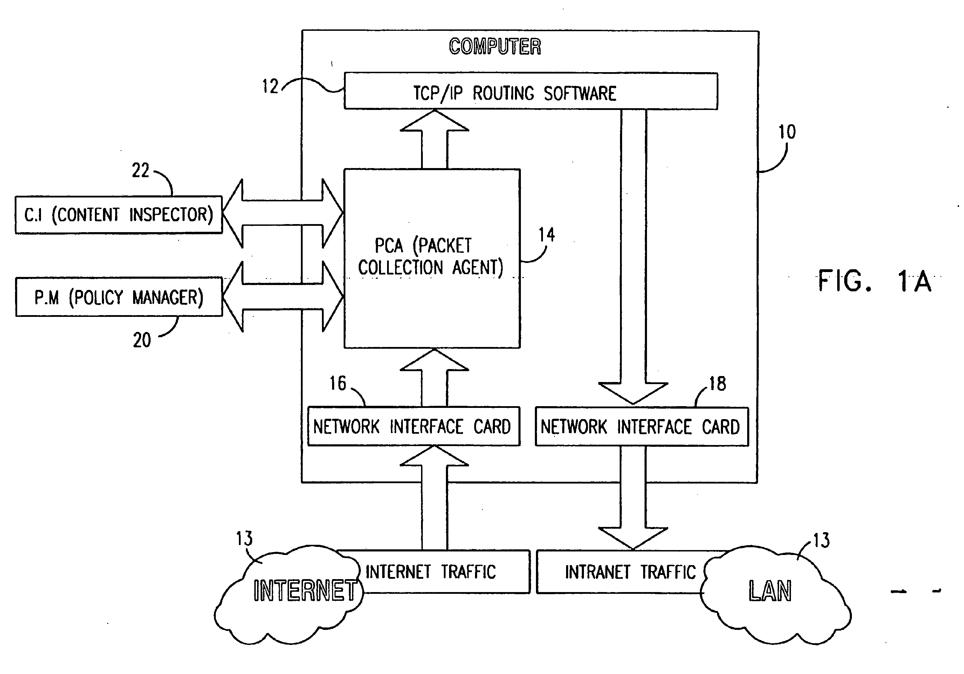

Reference is now made to Fig. 1A, which is a simplified block diagram illustration of implementation of the invention in a firewall-type configuration for checking incoming Internet but not intranet traffic. As seen in Fig. 1A, there is provided a typical computer 10 in which resides conventional TCP/IP routing software 12. Computer 10 is typically connected to a network 13.

In accordance with a preferred embodiment of the present invention a packet collection agent (PCA) 14 is interposed between a network interface card (NIC) 16 which receives Internet traffic and the TCP/IP routing software 12. In this embodiment, a separate NIC 18 handles intranet traffic and does not have a PCA interfaced between it and the TCP/IP routing software 12.

In accordance with a preferred embodiment of the present invention, the PCA 14 interfaces with policy manager software 20, which determines collection criteria, i.e. which types of packets of which types of files are collected, and inspection criteria, i.e. which types of content in a file are not allowed to pass to or from network 13.

Based on the criteria established by the policy manager software 20, the PCA 14 operates content inspector software 22, which inspects the packets of a file which fits the criteria for collection and inspection. The content inspector software 22 operates based on criteria established by the policy manager software 20 and reports its inspection findings to the PCA 14. Alternatively, policy manager software 20 may be obviated. In such a case, the PCA 14 and the content inspector software are each programmed with suitable criteria.

In accordance with a preferred embodiment of the invention, the PCA 14 does not delay transmittal of most packets, even of files that require inspection. Rather, while transmitting all but typically the last packet in a file, it operates content inspector software 22 to inspect the contents of the file. If the contents are found to be acceptable, typically the last packet is released. If the contents of a file are not found to be acceptable by the criteria typically established by the policy manager software 20, at least one packet, typically the last packet, is not released, preventing activation of the unacceptable content by the computer.

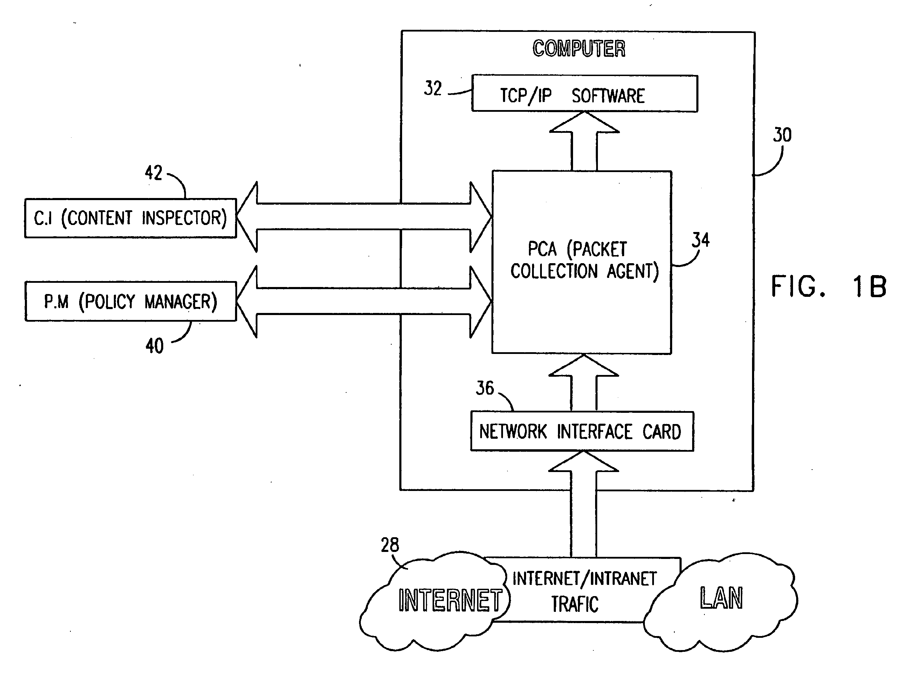

Reference is now made to Fig. 1B, which illustrates implementation of the invention for checking all incoming communications along a network 28. In this illustrated embodiment, as seen in Fig. 1B, there is provided a typical computer 30 on which resides TCP/IP software 32. In accordance with a preferred embodiment of the present invention, a packet collection agent (PCA) 34 is interposed between a network interface card (NIC) 36, which receives Internet and intranet traffic, and the TCP/IP software 32.

In accordance with a preferred embodiment of the present invention, as in the embodiment of Fig. 1A, the PCA 34 interfaces with policy manager software 40, which determines collection criteria, i.e. which types of packets of which types of files are collected, and inspection criteria, i.e. which types of content in a file are not allowed to pass to the computer.

Based on the criteria typically established by the policy manager software 40, the PCA 34 operates content inspector software 42, which inspects the packets of a file which fits the criteria for collection and inspection. The content inspector software 42 operates typically based on criteria established by the policy manager software 40 and reports its inspection findings to the PCA 34.

In accordance with a preferred embodiment of the invention, the PCA 34 does not delay transmittal of most packets, even of files that require inspection. Rather while transmitting all but typically the last packet in a file, it operates content inspector software 42 to inspect the contents of the file. If the contents are found to be acceptable, typically the last packet is released. If the contents of a file are not found to be acceptable by the criteria typically established by the policy manager software 40, at least one packet, typically the last packet, is not released, preventing activation of the unacceptable content by the computer.

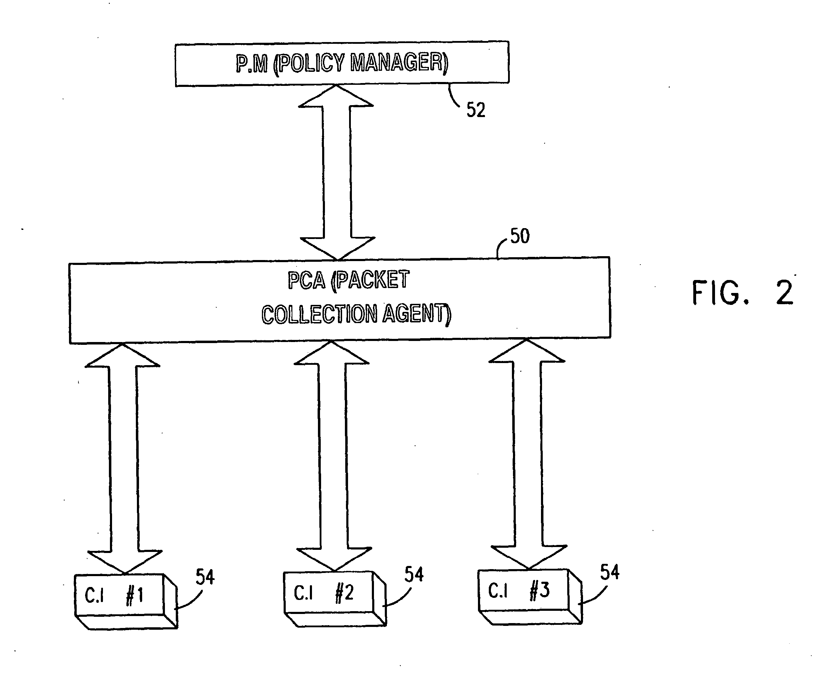

Reference is now made to Fig. 2, which is a simplified block diagram illustration of the use of multiple content inspectors by a single packet collection agent. As illustrated in Fig. 2, a single PCA 50 may interface with a single policy manager 52, which may, in certain embodiments be obviated, and with a plurality of content inspectors 54 simultaneously. This type of arrangement may be particularly useful for handling high traffic volumes.

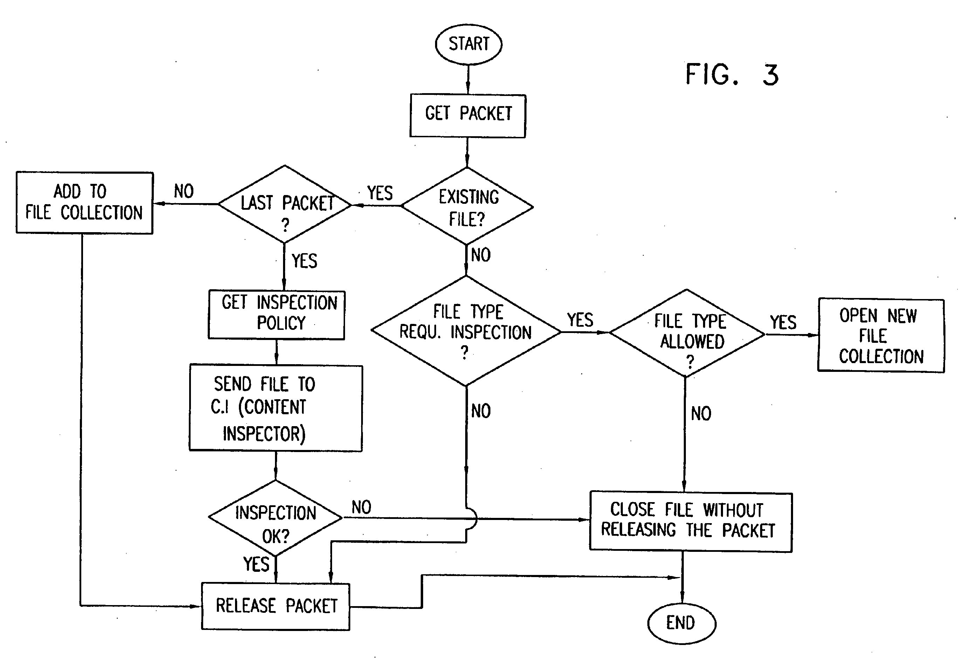

Reference is now made to Fig. 3, which is a simplified flow chart illustrating operation of a PCA in accordance with a preferred embodiment of the present invention.

As seen in Fig. 3, upon receipt of a packet, if the packet is received in the context of an existing file and is not the last packet, the packet is simultaneously stored and released to its destination, generally in real time.

If the packet is the last packet in a file, the PCA typically obtains the inspection criteria from the policy manager and sends all of the packets in the file to a content inspector for inspection in accordance with the inspection policy typically established by the policy manager. If the file passes inspection, the last packet is released as well. If not, the last packet is not released.

If the packet is the first packet of a new file and thus is a control packet as opposed to a data packet, the PCA employs the collection criteria typically established by the policy manager to determine whether the file requires inspection. If not, the packet and all subsequent packets of that file are immediately released as they arrive. If the file is a type of file that is not permitted, no packets are released. If, however, the file is a type of file that requires inspection, the packet is immediately released and the subsequent packets are inspected.

It will be appreciated by persons skilled in the art that the present invention is not limited by what has been particularly shown and described herein above.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A gateway (10) comprising an input for receiving communications packets, **characterized in that** it comprises:
an output for outputting communications packetsupon receipt thereof;
a policy manager for (20) determining criteria for the collection of packets and critera for the inspection of the collection of packets, said collection criteria being packet types to be collected of selected file types, and said inspection criteria being content to be inspected;
a packet collection agent (14) receiving packets from said input in accordance with criteria established by said policy manager (20); and
at least one content inspector (22) operated by the packet collection agent (14) and inspecting said collection of packets in accordance with said criteria,
said packet collection agent (14) being operative to prevent supply of at least one packet but not all packets of said collection of packets to said output when said collection of packets includes undesirable content in accordance with said criteria.

2. A gateway according to claim 1 and wherein said at least one packet is the last packet of a file.

3. A gateway according to any of claims 1 to 2 and wherein said packet collection agent (14) inspects all packets of files that are to be inspected.

4. A gateway according to any of claims 1 to 3 and wherein said at least one content inspector (22) includes a plurality of content inspectors (54) simultaneously inspecting said collection of packets.

5. A gateway according to any of claims 1 to 4 and wherein said policy manager (20) determines criteria whereby released of packets of some types of files is prevented by the packet collection agent.

6. A gateway according to any of claims 1 to 5 and wherein said packet collection agentoperates on Internet but not on intranst traffic.

7. A method for protecting a computer from malicious content comprising: the steps of:
at a gateway, determining criteria for the collection of packets and critera for the inspection of the collection of packets, said collection criteria being packet types to be collected of selected file types, and said inspection criteria being content to be inspected;
receiving packets from among the collection of packets in accordance with the criteria;
inspecting the packets in accordance with the criteria;
preventing output of at least one packet but not all packets of said collection of packets when the collection of packets includes undesirable content in accordance with the criteria; and
outputting packets other than the at least one packet upon receipt thereof.

8. A method according to claim 7 and wherein said at least one packet is the last packet of a file.

9. A method according to claim 7 and wherein said inspecting includes inspecting all packets of files that are to be inspected.

10. A method according to claim 7 and wherein said inspecting includes inspecting by a plurality of content inspectors simultaneously.

11. A method according to claim 7 and wherein said determining criteria includes determining criteria whereby packets of some types of files are prevented from being released.

12. A method according to claim 7 and wherein a packet collection agent operates on Internet but not on intranet traffic.

## Patentansprüche

1. Ein Gateway (10), das eine Eingabe zum Empfangen von Nachrichtenpaketen umfasst, **dadurch gekennzeichnet, dass** es folgendes umfasst:
eine Ausgabe zum Ausgeben von Nachrichtenpaketen bei ihrem Empfang;
einen Vorgehensweise-Verwalter (20) zum Bestimmen von Kriterien für die Sammlung von Paketen und von Kriterien für die Untersuchung der Sammlung von Paketen, wobei die Sammelkriterien zu sammelnde Pakettypen ausgewählter Dateitypen sind und wobei die Untersuchungskriterien der zu untersuchende Inhalt sind;
einen Paketsammelagenten (14), der in Übereinstimmung mit vom Vorgehensweise-Verwalter (20) festgelegten Kriterien Pakete von der Eingabe empfängt; und
mindestens einen vom Paketsammelagenten (14) betriebenen Inhaltsinspektor (22), der die Sammlung von Paketen in Übereinstimmung mit den Kriterien untersucht,
wobei der Paketsammelagent (14) wirksam ist, um die Zufuhr von mindestens einem Paket, aber nicht aller Pakete, aus der Sammlung von Paketen an die Ausgabe zu verhindern, wenn die Sammlung von Paketen in Übereinstimmung mit den Kriterien einen unerwünschten Inhalt einschließt.

2. Ein Gateway nach Anspruch 1, und worin das mindestens eine Paket das letzte Paket einer Datei ist.

3. Ein Gateway nach irgendeinem der Ansprüche 1 bis 2, und worin der Paketsammelagent (14) alle Pakete der Dateien untersucht, die untersucht werden sollen.

4. Ein Gateway nach irgendeinem der Ansprüche 1 bis 3, und worin der mindestens eine Inhaltsinspektor (22) mehrere Inhaltsinspektoren (54) einschließt, die gleichzeitig die Sammlung von Paketen untersuchen.

5. Ein Gateway nach irgendeinem der Ansprüche 1 bis 4, und worin der Vorgehensweise-Verwalter (20) Kriterien bestimmt, durch die die Freigabe von Paketen von einigen Dateitypen von den Paketsammelagenten verhindert wird.

6. Ein Gateway nach irgendeinem der Ansprüche 1 bis 5, und worin der Paketsammelagent im Internet-, aber nicht im IntranetVerkehr, arbeitet.

7. Ein Verfahren zum Schützen eines Computers vor einem böswilligen Inhalt schützt, das folgende Schritte umfasst:
das Bestimmen an einem Gateway von Kriterien für die Sammlung von Paketen und Kriterien für die Untersuchung der Sammlung von Paketen, wobei die Sammelkriterien zu sammelnde Pakettypen ausgewählter Dateitypen sind und wobei die Untersuchungskriterien den zu untersuchenden Inhalt darstellen;
das Empfangen von Paketen aus der Sammlung von Paketen in Übereinstimmung mit den Kriterien;
das Untersuchen der Pakete in Übereinstimmung mit den Kriterien;
das Verhindern der Ausgabe von mindestens einem Paket, aber nicht von allen Paketen aus der Sammlung von Paketen, wenn die Sammlung von Paketen in Übereinstimmung mit den Kriterien einen unerwünschten Inhalt einschließt; und
das Ausgeben von Paketen, die nicht das mindestens eine Paket sind, bei ihrem Empfang.

8. Ein Verfahren nach Anspruch 7, und worin das mindestens eine Paket das letzte Paket einer Datei ist.

9. Ein Verfahren nach Anspruch 7, und worin die Untersuchung das Untersuchen aller Dateienpakete einschließt, die untersucht werden sollen.

10. Ein Verfahren nach Anspruch 7, und worin die Untersuchung das gleichzeitige Untersuchen durch mehrere Inhaltsinspektoren einschließt.

11. Ein Verfahren nach Anspruch 7, und worin die Bestimmungskriterien Bestimmungskriterien einschließen, durch die verhindert wird, dass die Pakete einiger Dateitypen freigegeben werden.

12. Ein Verfahren nach Anspruch 7, und worin ein Paketsammelagent im Internet-, aber nicht im Intranetverkehr arbeitet.

## Revendications

1. Passerelle (10) comprenant une entrée pour recevoir des paquets de communication, **caractérisée en ce qu'**elle comprend :
une sortie pour émettre des paquets de communication à réception de ceux-ci ;
un gestionnaire de règles (20) pour déterminer des critères pour la collecte de paquets et des critères pour l'inspection de la collecte de paquets, lesdits critères de collecte étant des types de paquets devant être collectés de types de fichiers sélectionnés, et lesdits critères d'inspection étant le contenu devant être inspecté ;
un agent de collecte de paquets (14) recevant les paquets depuis ladite entrée selon les critères établis par ledit gestionnaire de règles (20) ; et
au moins un inspecteur de contenu (22) opéré par l'agent de collecte de paquets (14) et inspectant ladite collecte de paquets selon lesdits critères,
ledit agent de collecte de paquets (14) étant opérationnel pour empêcher la fourniture d'au moins un paquet, mais pas tous les paquets, de ladite collecte de paquets à ladite sortie, lorsque ladite collecte de paquets comprend un contenu indésirable selon lesdits critères.

2. Passerelle selon la revendication 1 et dans laquelle ledit au moins un paquet est le dernier paquet d'un fichier.

3. Passerelle selon l'une quelconque des revendications 1 à 2, et dans laquelle ledit agent de collecte de paquet (14) inspecte tous les paquets de fichiers qui doivent être inspectés.

4. Passerelle selon l'une quelconque des revendications 1 à 3, et dans laquelle ledit au moins un inspecteur de contenu (22) comprend une pluralité d'inspecteurs de contenu (54) inspectant simultanément ladite collecte de paquets.

5. Passerelle selon l'une quelconque des revendications 1 à 4, et dans laquelle ledit gestionnaire de règles (20) détermine des critères, de sorte que la libération de paquets de certains types de fichiers est entravée par l'àgent de collecte de paquets.

6. Passerelle selon l'une quelconque des revendications 1 à 5, et dans laquelle ledit agent de collecte de paquets opère sur Internet mais pas sur un réseau Intranet.

7. Procédé de protection d'un ordinateur contre des contenus malveillants comprenant les étapes suivantes :
au niveau d'une passerelle, la détermination des critères pour la collecte des paquets et des critères pour l'inspection de la collecte de paquets, lesdits critères de collecte étant des types de paquets devant être collectés de types de fichiers sélectionnés, et lesdits critères d'inspection étant le contenu devant être inspecté ;
la réception de paquets provenant de la collecte de paquets selon les critères
l'inspection des paquets selon-les critères ;
le blocage de la sortie d'au moins un paquet, mais pas tous les paquets, de ladite collecte de paquets, lorsque la collecte de paquets comprend un contenu indésirable selon les critères ; et
l'émission de paquets autres que le au moins un paquet à réception de ceux-ci.

8. Procédé selon la revendication 7 et dans lequel ledit au moins un paquet est le dernier paquet d'un fichier.

9. Procédé selon la revendication 7 et dans lequel ladite inspection comprend l'inspection de tous les paquets de fichiers qui doivent être inspectés.

10. Procédé selon la revendication 7 et dans lequel ladite inspection comprend l'inspection par une pluralité d'inspecteurs de contenu simultanément.

11. Procédé selon la revendication 7 et dans lequel ladite détermination des critères comprend la détermination des critères, de sorte que la libération des paquets de certains types de fichiers est entravée.

12. Procédé selon la revendication 7 et dans lequel un agent de collecte de paquets opère sur Internet, mais pas sur un réseau Intranet.
